Europäisches Patentamt

European Patent Office

Office européen des brevets

(19)

(11) Veröffentlichungsnummer : **0 130 285**
**B1**

(12) # EUROPÄISCHE PATENTSCHRIFT

(45) Veröffentlichungstag der Patentschrift :
21.01.87

(21) Anmeldenummer : 84103676.7

(22) Anmeldetag : 04.04.84

(51) Int. Cl.⁴ : **H 02 M 7/515**

(54) **Wechselrichter.**

(30) Priorität : 07.05.83 DE 3316806

(43) Veröffentlichungstag der Anmeldung :
09.01.85 Patentblatt 85/02

(45) Bekanntmachung des Hinweises auf die Patenterteilung : 21.01.87 Patentblatt 87/04

(84) Benannte Vertragsstaaten :
DE FR GB

(56) Entgegenhaltungen :
DE-A- 3 027 280
GB-A- 1 446 002
US-A- 3 733 539
US-A- 3 825 813

(73) Patentinhaber : ROBERT BOSCH GMBH
Postfach 50
D-7000 Stuttgart 1 (DE)

(72) Erfinder : Wirtz, Rainer, Dipl.-Ing.
Talstrasse 21
D-7145 Markgröningen (DE)

## Beschreibung

Stand der Technik

Die Erfindung geht aus von einem Wechselrichter nach der Gattung des Hauptanspruchs. Thyristor-Wechselrichter sind in vielfacher Form bereits bekannt. In der DE-OS 2 239 396 ist beispielsweise ein Thyristor-Wechselrichter mit Zwangskommutierung beschrieben, der von einer Gleichspannungsquelle versorgt wird und einen Drehstrom zum Betreiben eines Asynchronmotors erzeugt. In die einzelnen Brückenzweige des Wechselrichters sind bei der bekannten Anordnung Drosseln geschaltet, die zum Aussieben von Oberwellen aus der Versorgungsspannung der Drehstrom-Asynchronmaschine dienen. Diese Schaltungsanordnung hat den Nachteil, daß für jeden Zweig der Asynchronmaschine eine Drossel notwendig ist. Soll der Wechselrichter ein möglichst hohen Wirkungsgrad aufweisen, so ist es notwendig, diese Drosseln aufzuteilen und jeweils auf einen gemeinsamen Eisenkern unterzubringen. Solchermaßen hergestellte Drosseln sind jedoch recht teuer. Auch die Strommessung erfolgt bei bekannten Vorrichtungen im Brückenzweig, wie dies beispielsweise der DE-OS 2 114 098 zu entnehmen ist. Zur Bestimmung des gesamten Stromes sind bei der bekannten Anordnung drei Strommesser nötig. Sowohl die Siebung als auch die Strommessung ist bei den bekannten Anordnungen daher umständlich und erfordert einen hohen Bauteilaufwand. Als weiterer Nachteil dieser bekannten Anordnung ist anzusehen, daß die in der Drossel gespeicherte Energie im wesentlichen zwischen Drossel und Gleichspannungsquelle hin- und herpulsiert, was zu Verlusten führt.

Vorteile der Erfindung

Der erfindungsgemäße Wechselrichter mit den kennzeichnenden Merkmalen des Hauptanspruchs hat demgegenüber den Vorteil, daß die benötigte Drossel einfach herzustellen ist und zudem in jedem Schaltzustand des Wechselrichters die gleiche Hauptinduktivität in Reihe zu den Maschinenklemmen wirksam wird. Dadurch wird es möglich, die Häufigkeit des Zwischentaktens des Wechselrichters auf ein Minimum zu begrenzen und es wird verhindert, daß die in die Drossel gespeicherte Energie nutzlos zwischen Drossel und Gleichspannungsquelle hin- und herpulsiert oder in Kurzschlußkreisen in Wärme umgesetzt wird. Der erfindungsgemäße Wechselrichter hat daher einen hohen Wirkungsgrad und ist zudem preisgünstig herzustellen.

Durch die in den Unteransprüchen aufgeführten Maßnahmen sind vorteilhafte Weiterbildungen und Verbesserungen des im Hauptanspruch angegebenen Wechselrichters möglich. Besonders vorteilhaft ist es, nach den Drosseln jeweils eine Strommeßeinrichtung zu schalten. Diese Anordnung der Strommeßeinrichtung hat den Vorteil, daß nur zwei Strommesser notwendig sind und daß nur eine einzige Stromrichtung zu messen ist. Um die Leistungsaufnahme bestimmen zu können, ist es günstig, wenn die Meßwerte der Strommeßeinrichtungen addiert sind. Zur Vereinfachung des Wechselrichters ist es im Falle der Verwendung von Thyristoren günstiger, wenn zur Löschung der ersten Gruppe von Thyristoren eine erste Löschbrücke und zur Löschung der zweiten Gruppe von Thyristoren eine zweite Löschbrücke vorgesehen ist. Dadurch läßt sich der Aufwand an Thyristoren stark reduzieren, was auch die Ansteuerung des Wechselrichters vereinfacht. In diesem Fall ist es erforderlich, in die Rückstromleitungen Dioden einzuschalten, die verhindern, daß die zum Löschen der Thyristoren zwischen der Rückstromleitung und der Versorgungsleitung erforderliche positive Spannung zur anderen negativen Batterieklemme kurzgeschlossen wird.

Zeichnung

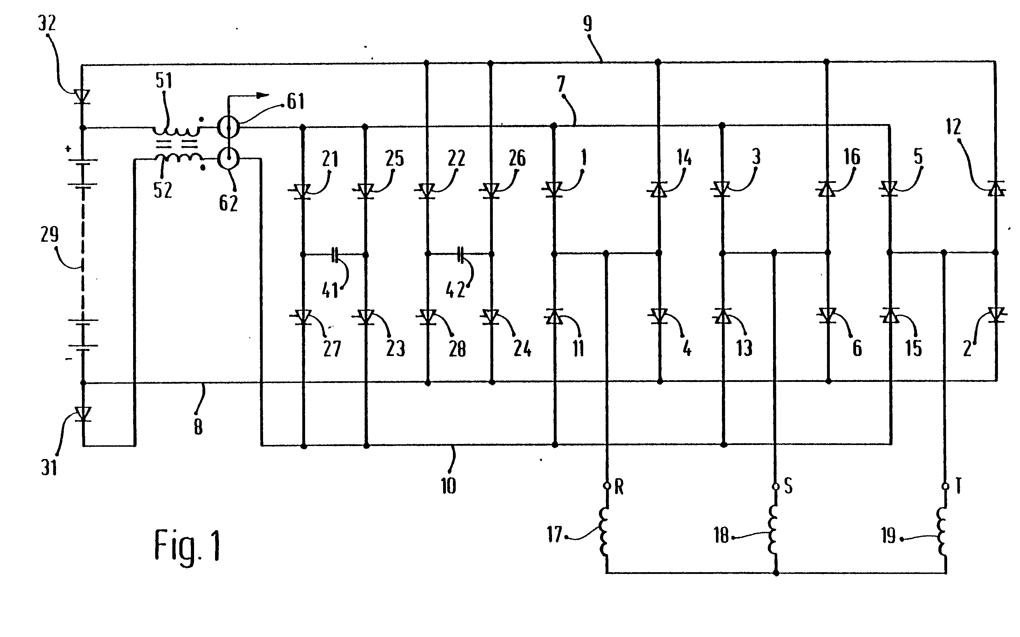

Ausführungsbeispiele der Erfindung sind in der Zeichnung dargestellt und in die nachfolgenden Beschreibung näher erläutert. Die Figuren 1 bis 3 zeigen drei Ausführungsbeispiele der Erfindung.

Beschreibung der Ausführungsbeispiele

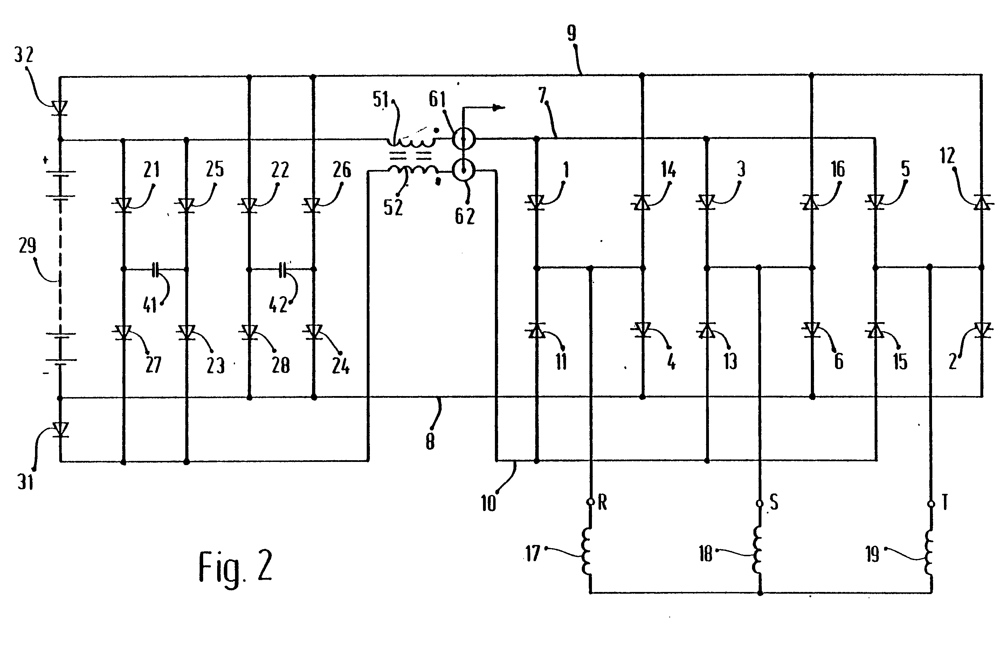

Die Figuren 1 und 2 zeigen Drehstromwechselrichter zum Betrieb einer Drehstrommaschine mit den Wicklungen 17, 18 und 19 aus einer Gleichspannung, die beispielsweise aus einem Gleichrichter oder aus einer Batterie 29 gewonnen wird. Die positive Batteriespannung gelangt über eine Drossel 51 und einen Strommesser 61 zu einer Gruppe von Hauptventilen 1, 3 und 5, die mit der positiven Versorgungsspannungsleitung 7 verbunden sind. Als Ventile eignen sich insbesondere Thyristoren. Die negative Batterieklemme ist an die negative Versorgungsspannungsleitung 8 angeschlossen, die mit den Hauptventilen 2, 4 und 6 verbunden ist. Jedem der Ventile 1 bis 6 sind Rücklieferungsventile 11 bis 16 zugeordnet, die gleichzeitig zur Verteilung der Löschenergie dienen. Die Rücklieferungsventile 11, 13 und 15 sind dabei mit der negativen Rücklieferungsleitung 10 verbunden, die ihrerseits zu einem Strommesser 62 führt. Dem Strommesser 62 folgt eine Drossel 52, die mit der Drossel 51 magnetisch eng gekoppelt ist und vorzugsweise gleiche Windungszahl hat. Der Drossel 52 folgt eine Diode 31, die in Sperrichtung geschaltet ist und zur negativen Versorgungsspannungsleitung 8 führt. Die Rücklieferungsventile 12, 14 und 16 sind an die positive Rücklieferungsleitung 9 angeschlossen, die über eine Diode 32 mit der positiven Batterieklemme verbunden ist. Jeder Ventilgruppe 1, 3 und 5 bzw. 2, 4, 6 ist über die Rücklieferungsventile 11, 13, 15 bzw. 12, 14 und 16 eine Löscheinrichtung zugeordnet. Die Löscheinrichtung mit der Brückenschaltung der Thyristoren 21, 23, 25 und 27 und dem Kondensator 41 dient zur Löschung der ersten Ventilgruppe, die Löscheinrichtung mit den Thyristoren 22, 24, 26 und 28 und mit dem Kondensator 42 dient zur Löschung der zweiten Gruppe von Thyristoren. Die erste Löschbrücke ist hierbei zwischen der positiven Versorgungsspannungsleitung 7 und der negativen Rückstromleitung 10 geschaltet, während die zweite Löschbrücke zwischen der negativen Versorgungsspannungsleitung 8 und der positiven Rückstromleitung 9 angeordnet ist. An die Mitte der Brücken mit den Hauptventilen und den Rücklieferungsventilen sind Klemmen, R, S und T angeschlossen, an die eine Drehstrommaschine mit den Wicklungen 17, 18 und 19 in Sternschaltung angeklemmt ist.

Das Ausführungsbeispiel nach Figur 2 unterscheidet sich vom Ausführungsbeispiel nach Figur 1 dadurch, daß die Drosseln 51 und 52 mit den nachgeschalteten Strommeßeinrichtungen 61 und 62 nicht direkt nach der Batterie geschaltet sind, sondern daß sie zwischen den Löschbrücken und den Brücken mit den Hauptventilen angeordnet sind. Ihre Wirkungsweise wird dadurch nicht beeinträchtigt.

Die Funktionsweise dieser Schaltungsanordnungen sind durch die vorgenannten Druckschriften bereits hinreichend bekannt, so daß hier nur kurz darauf eingegangen werden soll. Die Funktionsweise soll beispielhaft bei den Hauptventilen 1 und 2 näher erläutert werden. Im Falle eines Stromflusses fließt der Strom von der positiven Klemme der Batterie 29 über die Drossel 51 und den Stromwandler 61 zum leitend geschalteten Thyristor 1. Er passiert dann über den Anschluß R die Wicklungen 17 und 19 und fließt über den Anschluß T und den leitend geschalteten Thyristor 2 zur negativen Batterieklemme zurück.

Im Falle des Freilaufes fließt ein Strom über die Diode 31, die Drossel 52 und den Stromwandler 62 zum leitend geschalteten Thyristor 11. Von hier gelangt der Strom über die Klemme R zur Wicklung 17 und zur Wicklung 19 und verläßt die Asynchronmaschine über die Klemme T. Über den Thyristor 2 gelangt der Strom wiederum an die Diode 31.

Eine weitere Möglichkeit des Stromflusses bei Freilauf ist dann gegeben, wenn der Strom von der Diode 32 über die Drossel 51, den Stromwandler 61 und den Thyristor 1 zur Klemme R gelangt und nach dem Passieren der Wicklungen 17 und 19 über die Klemme T zum Thyristor 12 und über die Diode 32 wiederum zum positiven Batteriespannungsanschluß führt. Eine Energierücklieferung findet dann statt, wenn der Stromfluß von dem Minusanschluß der Batterie 29 über die Diode 31, die Drossel 52, den Stromwandler 62 und den Thyristor 11 zur Klemme R fließt und nach dem Passieren der Wicklungen 17 und 19 an der Klemme T austritt. Der Strom fließt weiter über den Thyristor 12 und die Diode 32 zur positiven Anschlußklemme der Batterie 29. Die Schaltzustände der übrigen Hauptventile sind entsprechend gesteuert.

An der Beschreibung des Stromflusses ist ohne weiteres erkennbar, daß im Maschinenkreis jeweils die gleiche Hauptinduktivität wirksam ist, da immer eine der beiden Drosseln 51 oder 52 vom Strom durchflossen ist. Es ist daher immer die gleiche Induktivität für die Glättung der Stromwelligkeit wirksam, unabhängig davon, in welchem Betriebszustand sich der Wechselrichter befindet. Die Induktivität der gekoppelten Drosseln kann beliebig groß sein. Der Stromübergang von einer Maschinenklemme auf die andere wird dadurch nicht verzögert. Dadurch, daß stets die gleiche Drossel-induktivität im Maschinenkreis wirksam ist, sind Steuerverfahren des Wechselrichters möglich, bei denen die Häufigkeit des Zwischentaktens auf ein Minimum begrenzt ist. Weiterhin wird dadurch verhindert, daß die in den Drosseln 51 und 52 gespeicherte Energie nutzlos zwischen Drossel und Gleichspannungsquelle hin- und herpulsiert oder in Kurzschlußkreisen in Wärme umgesetzt wird. Durch diese Anordnung der Drosseln werden weiterhin Zusatzspannungen an den Ventilen bei der Stromkommutierung vermieden, da die magnetische Durchflutung der Hauptinduktivität sich dabei nicht plötzlich ändert, sondern der Strom lediglich von der einen Wicklung 51 auf die andere 52 übergeht. Insgesamt wird dadurch ein hoher Wirkungsgrad der Anordnung und eine gute Ausnutzung von Wechselrichter und Maschine in jedem Betriebsbereich erzielt.

Durch die Anordnung der Stromwandler direkt hinter den Drosseln wird einerseits erreicht, daß die Zahl der Stromwandler auf zwei begrenzt ist und daß der Klemmenstrom lückenlos und frei von Störeinflüssen gemessen werden kann. Da der Strom durch die Drosseln nur in einer Richtung fließt, hat die Anordnung der Stromwandler direkt hinter den Drosseln den weiteren Vorteil, daß nur eine einzige Stromrichtung zu messen ist. Die elektrische Schaltung der Strommeßvorrichtung wird dadurch wesentlich vereinfacht.

Die in Figur 2 gezeigte Schaltungsanordnung ist funktionell mit der in Figur 1 gezeigten Schaltungsanordnung identisch, so daß sich eine nähere Beschreibung erübrigt. Die Wirkung und Funktion der Löschbrücken sind bereits in den zuvor genannten Druckschriften ausführlich beschrieben worden, so daß sie hier nicht mehr erläutert wird.

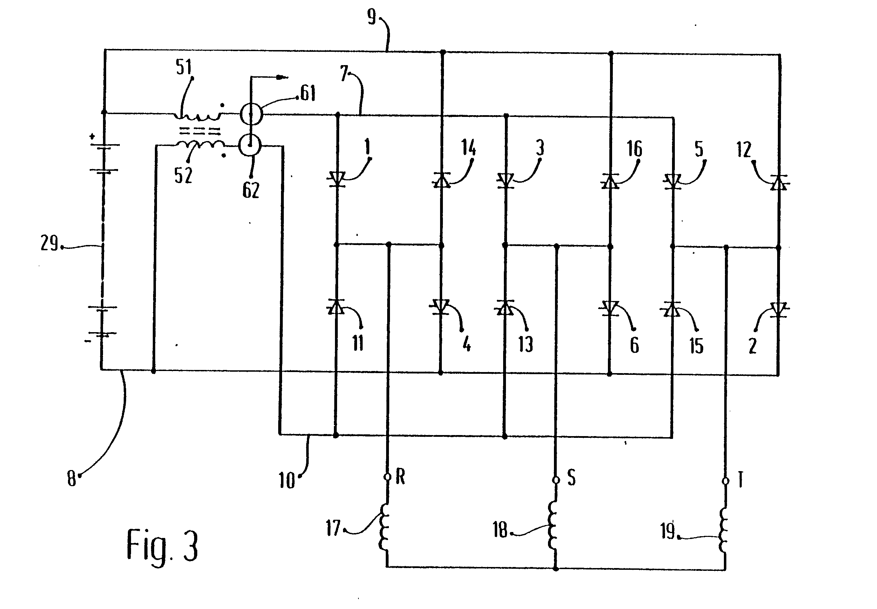

Die erfindungsgemäße Anordnung mit den gekoppelten Drosseln und den nachgeschalteten Stromwandlern ist nicht auf Thyristor-Wechselrichter mit Gruppenlöschung beschränkt. Die Figur 3 zeigt allgemein die Anordnung, wenn die Hauptventile einzeln löschbar sind, z. B. Thyristoren mit Einzellöscheinrichtungen oder über das Gate löschbare Thyristoren oder Transistoren vorgesehen sind. Die Löschbrücken sowie die Rücklieferungsdioden 31, 32 entfallen dann. Allerdings müssen die Hauptventile in Rückwärtsrichtung sperren und die Rücklieferungsventile müssen ansteuerbar sein, da anderenfalls die erfindungsgemäße Funktion der Drossel und des Summenstromwandlers nicht in jedem Schaltzustand, insbesondere nicht im Schaltzustand Freilauf vorhanden ist.

Die Figur 3 ist im übrigen bis auf die zuvor genannten fehlenden Elemente gleich beschaltet. An dem Pluspol der Batterie 29 ist die Drossel 51 angeschlossen, deren Ausgang zu einem Stromwandler 61 führt. Von der positiven Versorgungsspannungsleitung 7 gehen die Hauptventile 1, 3 und 5 aus, die zur Brückenmitte geschaltet sind. Von der Brückenmitte führen die Hauptventile 2, 4 und 6 zur negativen Versorgungsspannungsleitung 8, die an den negativen Pol der Batterie 29 angeschlossen ist. An die negative Rückstromleitung 10 führen von der jeweiligen Brückenmitte die Rückstromventile 11, 13 und 15, während zur positiven Rückstromleitung 9 die Rückstromventile 12, 14 und 16 geschaltet sind. Die positive Rückstromleitung 9 steht mit der positiven Klemme 29, die negative Rückstromleitung 10 steht über den Stromwandler 62 und die Drossel 52 mit der negativen Klemme der Batterie 29 in Verbindung. In der Mitte der einzelnen Brücken sind die Klemmen R, S und T angeschlossen, an die in einer Sternschaltung die Asynchronmaschine angeschlossen ist, die die Wicklungen 17, 18 und 19 aufweist. Auch bei dieser Schaltungsanordnung bleibt entweder die Drossel 51 oder die Drossel 52 in allen Betriebszuständen im Stromkreis, so daß sich die zuvor erwähnten Vorteile ergeben.

Ohne Änderungen der Eigenschaften der Schaltungsanordnung ist es ebenfalls möglich, die Drosseln 51 und 52 in die negative Versorgungsspannungsleitung 8 und in die positive Rückstromleitung 9 einzuschalten. Ebenso ist eine symmetrische Anordnung von vier gekoppelten bzw. Zwei Gruppen von je zwei gekoppelten Drosseln in den vier Zuleitungen zu den Ventilgruppen möglich.

## Patentansprüche

1. Mehrphasiger Wechselrichter, bei dem jede Phase (R, S, T) über ein zu einer ersten Gruppe gehörendes steuerbares Ventil (1, 3, 5) an eine Plusleitung (7) sowie über ein zu einer zweiten Gruppe gehörendes steuerbares Ventil (2, 4, 6) an eine Minusleitung (8) angeschlossen ist und bei dem die einzelnen Phasen (R, S, T) über Rücklieferungsventile (11, 12, 13, 14, 15, 16) an eine positive und an eine negative Rückstromleitung (9 bzw. 10) angeschlossen sind, dadurch gekennzeichnet, daß in eine Versorgungsspannungsleitung (7 bzw. 8) und in die, die gleiche Stromrichtung führende Rückstromleitung (10 bzw. 9) jeweils eine Drossel (51, 52) geschaltet ist und daß beide Drosseln (51, 52) derart magnetisch miteinander gekoppelt sind, daß in jedem Schaltzustand des Wechselrichters die gleiche Hauptinduktivität in Reihe zu den Maschinenklemmen wirksam ist.

2. Wechselrichter nach Anspruch 1, dadurch gekennzeichnet, daß nach den Drosseln (51, 52) jeweils eine Strommeßeinrichtung (61, 62) geschaltet ist.

3. Wechselrichter nach Anspruch 2, dadurch gekennzeichnet, daß die Meßwerte der Strommeßeinrichtungen (61, 62) addiert sind.

4. Wechselrichter nach einem der Ansprüche 1 bis 3, dadurch gekennzeichnet, daß zur Löschung der ersten Gruppe von als Thyristoren (1, 3, 5) ausgebildeten Ventilen eine erste Löschbrücke mit vier Thyristoren (21, 23, 25, 27) und einem Kommutierungskondensator (41) sowie zur Löschung der zweiten Gruppe von als Thyristoren (2, 4, 6) ausgebildeten Ventilen eine zweite Löschbrücke mit vier Thyristoren (22, 24, 26, 28) und ein Kommutierungskondensator (42) vorgesehen ist, daß die erste Löschbrücke zwischen der Plusleitung und der negativen Rückstromleitung und daß die zweite Löschbrücke zwischen der positiven Rückstromleitung und der Minusleitung geschaltet ist.

5. Wechselrichter nach einem der vorhergehenden Ansprüche, dadurch gekennzeichnet, daß zwischen der positiven Rückstromleitung und der Plusleitung und zwischen der negativen Rückstromleitung und der Minusleitung jeweils eine Diode angeordnet ist.

6. Wechselrichter nach einem der vorhergehenden Ansprüche, dadurch gekennzeichnet, daß die Drosseln (51, 52) auf einem gemeinsamen Kern angeordnet sind und gleiche Windungszahlen aufweisen.

7. Wechselrichter nach einem der vorhergehenden Ansprüche, dadurch gekennzeichnet, daß zwei gekoppelte Drosselpaare in den entsprechenden Versorgungsleitungen und in den entsprechenden Rückstromleitungen angeordnet sind.

## Claims

1. Multi-phase invertor in which each phase (R, S, T) is connected *via* a gate-controllable rectifier (1, 3, 5), belonging to a first group, to a positive line (7) and *via* a gate-controllable rectifier (2, 4, 6), belonging to a second group, to a negative line (8) and in which the individual phases (R, S, T) are connected *via* return rectifiers (11, 12, 13, 14, 15, 16) to a positive and to a negative return-current line (9 and 10, respectively), characterized in that a reactor (51, 52) is connected in each case into a supply voltage line (7 and 8) and into the return-current line (10 and 9) carrying the same current direction and that the two reactors (51, 52) are magnetically coupled to each other in such a manner that in each switched condition of the invertors the same main inductance is effective in series with the machine terminals.

2. Invertor according to Claim 1, characterized in that the reactors (51, 52) are in each case followed by a current measuring device (61, 62).

3. Invertor according to Claim 2, characterized in that the values measured by the current measuring devices (61, 62) are added.

.

4. Invertor according to one of Claims 1 to 3, characterized in that for turning off the first group of rectifiers constructed as thyristors (1, 3, 5), a first gate-turn-off bridge comprising four thyristors (21, 23, 25, 27) and a commutation capacitor (41) is provided and for turning off the second group of rectifiers constructed as thyristors (2, 4, 6) a second gate-turn-off bridge comprising four thyristors (22, 24, 26, 28) and a commutation capacitor (42) is provided, that the first gate-turn-off bridge is connected between the positive line and the negative return-current line and that the second gate-turn-off bridge is connected between the positive return-current line and the negative line.

5. Invertor according to one of the preceding claims, characterized in that a diode is arranged in each case between the positive return-current line and the positive line and between the negative return-current line and the negative line.

6. Invertor according to one of the preceding claims, characterized in that the reactors (51, 52) are arranged on a common core and have the same number of turns.

7. Invertor according to one of the preceding claims, characterized in that two coupled pairs of reactors are arranged in the corresponding supply lines and in the corresponding return-current lines.

**Revendications**

1. Onduleur polyphasé, dans lequel chaque phase (R, S, T) est raccordée par l'intermédiaire d'une valve susceptible d'être commandée (1, 3, 5), et appartenant à un premier groupe, à une liaison positive (7), tandis qu'elle est raccordée par l'intermédiaire d'une valve susceptible d'être commandée (2, 4, 6), et appartenant à un second groupe, à une liaison négative (8), et dans cet onduleur les différentes phases (R, S, T) sont raccordées par l'intermédiaire de valves de retour (11, 12, 13, 14, 15, 16) à une liaison de retour positive et à une liaison de retour négative (9 ou bien 10), onduleur caractérisé en ce que sur une liaison de tension d'alimentation (7 ou bien 8) et sur la liaison de courant de retour (10 ou bien 9), le courant passe dans le même sens, est respectivement branchée une bobine d'inductance (51, 52), et ces deux bobines d'inductance (51, 52) sont couplées magnétiquement ensemble de façon que dans chaque état de commutation de l'onduleur, la même inductance principale soit agissante en série par rapport aux bornes de la machine.

2. Onduleur selon la revendication 1, caractérisé en ce qu'à la suite des bobines d'inductance (51, 52) est respectivement branché un dispositif de mesure du courant (61, 62).

3. Onduleur selon la revendication 2, caractérisé en ce que les valeurs de mesure des dispositifs de mesure du courant (61, 62) sont totalisées.

4. Onduleur selon une des revendications 1 à 3, caractérisé en ce que pour éteindre le premier groupe de valves constituées par des thyristors (1, 3, 5) il est prévu un premier pont d'extinction avec quatre thyristors (21, 23, 25, 27) et un condensateur de commutation (41), tandis que pour éteindre le second groupe de valves constituées par des thyristors (2, 4, 6), il est prévu un second pont d'extinction avec quatre thyristors (22, 24, 26, 28) et un condensateur de commutation (42), le premier pont d'extinction étant branché entre la liaison positive et la liaison de retour négative, tandis que le second pont d'extinction est branché entre la liaison de retour positive et la liaison négative.

5. Onduleur selon une des précédentes revendications, caractérisé en ce qu'une diode est respectivement disposée, d'une part, entre la liaison de retour positive et la liaison positive, et, d'autre part, entre la liaison de retour négative et la liaison négative.

6. Onduleur selon une des précédentes revendications, caractérisé en ce que les bobines d'inductance (51, 52) sont disposées sur un noyau commun et comportent le même nombre de spires.

7. Onduleur selon une des précédentes revendications, caractérisé en ce que deux paires couplées de bobines d'inductance sont disposées sur les liaisons d'alimentation correspondantes et sur les liaisons de retour correspondantes.

Fig. 1

Fig. 2

Fig. 3

0 130 285